# DEMANDE DE BREVET EUROPEEN

(11) **EP 1 635 298 A1**
(43) Date de publication de la demande: **15.03.2006**
(21) Numéro de dépôt: 05300725.8
(22) Date de dépôt: 07.09.2005
(51) Int. Cl.: G06T 17/40

(54) **Procédé et dispositif permettant de générer une image de synthèse d'au moins une frange de cils**

(30) Priorité: 07.09.2004 FR 0409532
(71) Demandeur: L'OREAL, 75008 Paris (FR)
(72) Inventeur: Giron, Franck, 77164 Ferrieres en Brie (FR); Doublet, Eric, 91270 Vigneux sur Seine (FR)
(74) Mandataire: Tanty, François

(57) **Abrégé**

La présente invention concerne un procédé permettant de simuler l'aspect au moins d'une frange de cils, comportant la génération, en fonction d'au moins une valeur d'au moins un paramètre de simulation pouvant être modifiée par un utilisateur, au moins une image 3D de la frange de cils.

L'image de synthèse peut être générée à partir d'une simulation multizone de la frange, cette simulation multizone permettant à l'utilisateur de définir (14) des valeurs de paramètres de simulations propres à au moins deux zones différentes de la frange.

## Description

La présente invention concerne un procédé et un dispositif permettant notamment de simuler au moins l'aspect d'au moins une frange de cils.

L'expression "frange de cils" désigne, dans la description et les revendications, aussi bien les cils des paupières inférieure et supérieure que ceux de l'arcade sourcilière.

Il existe un besoin pour faciliter le développement de nouveaux produits ou traitements pour les cils, et pour bénéficier d'outils d'aide à l'évaluation des cils et permettant de délivrer des conseils en matière de maquillage notamment.

L'invention a pour objet, selon l'un de ses aspects, un procédé permettant de simuler l'aspect d'au moins une frange de cils, comportant :
- générer, en fonction d'au moins un paramètre de simulation pouvant être modifié par un utilisateur, au moins une image 3D de la frange de cils.

L'image 3D peut par exemple être générée de manière à correspondre à une direction d'observation donnée, qui peut être choisie par l'utilisateur le cas échéant.

Le procédé selon l'invention peut permettre, par exemple, de proposer un traitement et/ou un produit répondant aux attentes d'une personne après avoir simulé l'effet d'un tel produit et/ou traitement sur les cils. L'invention peut notamment permettre à cette personne de visualiser différents résultats de maquillage, par exemple des maquillages extrêmes, avant de faire son choix.

Le traitement peut comprendre une courbure à chaud des cils.

L'invention peut également permettre, par exemple, de réaliser des atlas d'évaluation en produisant plusieurs images de cils virtuels, ces images correspondant à différentes valeurs d'un même paramètre par exemple.

L'invention peut encore contribuer à rendre les sites Internet délivrant des conseils de beauté plus attractifs, notamment en offrant de nouvelles possibilités de maquillage virtuel interactif des yeux.

Dans un exemple de mise en oeuvre de l'invention, la simulation s'effectue de manière à tenir compte de l'application ou non d'un produit sur les cils et/ou d'un traitement effectué. Cela peut permettre à un observateur de visualiser l'incidence sur l'aspect des yeux de la présence ou non d'un mascara, par exemple, ou l'impact d'un appareil de traitement tel qu'un fer à recourber.

Par « image 3D », on désigne une image générée à partir des coordonnées dans l'espace d'au moins une partie de la frange de cils. Une image 3D peut permettre, le cas échéant, si le logiciel de visualisation le permet, à l'observateur de faire varier à son gré l'orientation de l'objet relativement à la direction d'observation. Une image 3D peut être affichée sur un écran conventionnel, à tube cathodique, cristaux liquides ou plasma, avec ou sans vision stéréographique. La vision stéréographique peut être obtenue, le cas échéant, en utilisant des lunettes adaptées, par exemple à verres rouge et vert ou à obturateurs à cristaux liquides synchronisés avec l'affichage. L'image 3D peut être imprimée ou transmise à distance, sous la forme d'un fichier. L'image 3D peut encore être enregistrée sur tout support adapté, par exemple optique ou électronique. L'image 3D peut comporter une information topographique et une information sur la texture.

L'image de synthèse de la frange de cils peut être incorporée à l'image d'un visage, laquelle est avantageusement une image 3D. L'image du visage peut notamment être au moins partiellement une image réelle, par exemple celle d'une personne à qui un conseil de beauté est délivré. « Image réelle » signifie que l'on cherche à reproduire le relief et/ou la texture du visage réel, mieux les deux. Une image réelle peut permettre à l'observateur de reconnaître l'individu qui est la base d'une telle image. Par « conseil de beauté », on désigne un conseil qui peut se rapporter par exemple à un maquillage à effectuer ou à un produit de soin à appliquer, entre autres.

Le conseil de beauté peut être délivré après avoir recueilli le propre avis de l'individu sur au moins une caractéristique de ses cils, celui-ci ayant pu observer au moins une frange simulée et ayant pu modifié au moins un paramètre de simulation pour que la frange simulée reflète le résultat désiré.

Dans un exemple de mise en oeuvre de l'invention, l'image de synthèse est générée cil par cil, la frange de cils pouvant comporter par exemple entre 10 et 300 cils.

Un facteur aléatoire au moins est avantageusement appliqué à au moins une caractéristique de la frange, des cils la composant ou du produit appliqué sur les cils et/ou du traitement effectué, ce qui peut permettre d'accroître le réalisme de la simulation.

Ce facteur aléatoire peut être appliqué par exemple à au moins une caractéristique géométrique des cils, laquelle peut notamment être choisie parmi la courbure, la longueur, l'épaisseur des cils et les angles définissant l'orientation dans laquelle les cils s'étendent depuis la surface de la peau.

En variante, ou additionnellement, ce facteur aléatoire peut être appliqué à au moins une caractéristique de la frange de cils choisie par exemple parmi le nombre de cils, la présence ou non d'un produit de maquillage sur les cils et l'épaisseur de la frange.

Le facteur aléatoire peut encore être appliqué à l'épaisseur de produit déposée sur les cils.

Le facteur aléatoire peut encore être appliqué à au moins une caractéristique d'un appareil de traitement tel qu'un fer à recourber.

L'image de synthèse peut être générée à partir d'une simulation multizone de la frange, cette simulation multizone permettant à l'utilisateur d'entrer des valeurs de simulation différentes pour au moins deux zones différentes de la frange. L'utilisateur peut par exemple paramétrer différemment au moins une zone centrale et deux zones gauche et droite respectivement situées de part et d'autre de cette zone centrale. La simulation multizone peut permettre à un utilisateur de simuler des maquillages non homogènes sur l'ensemble de la frange de cils ou un traitement non effectué uniformément sur la totalité de la frange de cils. Le cas échéant, le procédé de simulation peut tenir compte de la nature de l'applicateur et du produit utilisé pour maquiller les cils.

Le procédé de simulation peut aussi prendre en compte la nature de l'appareil de traitement et/ou la manière dont le traitement est effectué et/ou au moins une caractéristique du produit utilisé avec l'appareil de traitement.

Dans un exemple de mise en oeuvre de l'invention, l'utilisateur peut modifier au moins une valeur d'un paramètre de simulation concernant au moins une caractéristique de la frange, laquelle peut être choisie par exemple parmi le nombre de cils, la présence ou non d'un produit de maquillage sur les cils, l'existence ou non d'un traitement et l'épaisseur de la frange.

Dans un exemple de mise en oeuvre de l'invention, l'utilisateur peut modifier au moins une valeur d'un paramètre de simulation concernant au moins une caractéristique des cils, laquelle peut être choisie par exemple parmi la courbure des cils, leur longueur, leur épaisseur, et les angles définissant l'orientation dans laquelle les cils s'étendent depuis la surface de la peau.

Dans un exemple de mise en oeuvre de l'invention, l'utilisateur peut modifier au moins une valeur d'un paramètre de simulation concernant au moins une caractéristique d'un produit appliqué sur les cils, laquelle peut être choisie par exemple parmi l'épaisseur de produit déposée et la répartition du produit sur la frange de cils.

Dans des exemples de mise en oeuvre de l'invention, l'utilisateur peut modifier au moins une valeur d'un paramètre de simulation relativement à au moins une caractéristique d'un traitement effectué sur les cils.

Dans un exemple de mise en oeuvre de l'invention, on affiche au moins un moyen de réglage de la valeur d'au moins un paramètre de simulation sur un même écran que l'image de synthèse de la frange de cils et l'on modifie de manière quasi-simultanée l'aspect de l'image de synthèse en réponse à tout changement de ce paramètre de simulation. Par « quasi-simultanée », il faut comprendre que toute nouvelle image de synthèse est affichée après le temps de calcul nécessaire à sa définition. Les moyens de réglage peuvent comporter par exemple un curseur et/ou un champ permettant d'entrer une valeur.

Les valeurs des paramètres visualisés peuvent être en unités métriques. La longueur des cils peut, par exemple, être donnée en *cm* où en *in,* plutôt qu'en unités arbitraires.

Dans un exemple de mise en oeuvre de l'invention, on permet à l'utilisateur de faire varier la direction d'observation, de manière continue ou non. Un moyen de réglage de la direction d'observation, par exemple un curseur ou des flèches, peut être affiché simultanément avec l'image de synthèse de la frange de cils.

Dans un exemple de mise en oeuvre de l'invention, on acquiert plusieurs images du visage d'une personne dans des directions d'observation prédéfmies et l'on calcule les images de synthèse des cils qui correspondent à ces directions d'observation. L'image 3D de la frange de cils correspondant à une direction d'observation peut être incrustée dans l'image du visage acquise dans la même direction.

L'acquisition et l'analyse pour générer une image 3D peut se faire sur seulement une portion du visage de l'individu.

Par exemple, l'acquisition et l'analyse peuvent se faire sur seulement environ la moitié du visage de l'individu et le visage entier peut être reconstitué grâce à une symétrie entre les deux moitiés du visage.

Les données concernant le relief du visage peuvent être obtenues en utilisant au moins une caméra et n'importe quel éclairage approprié, par exemple un éclairage structuré.

Dans des exemples de mise en oeuvre, les données sont acquises sur 180°, par exemple sur sensiblement 360°, pour permettre une visualisation et/ou une simulation d'autres éléments que les cils, par exemple les cheveux.

Dans un exemple de mise en oeuvre de l'invention, on permet à l'utilisateur de faire varier l'éclairage du visage comportant l'image 3D de la frange de cils, notamment l'intensité et/ou l'orientation de la lumière incidente.

L'illumination peut varier selon des conditions prédéterminées telles que, par exemple, la lumière du jour, la lumière du soir ou une lumière artificielle.

L'invention a encore pour objet, selon un autre de ses aspects, un dispositif permettant de simuler l'aspect d'au moins une frange de cils, comportant:
- une unité de calcul,
- des moyens d'acquisition,
l'unité de calcul étant agencée pour générer, en fonction d'au moins une valeur d'au moins un paramètre de simulation acquise par les moyens d'acquisition et pouvant être modifiée par l'utilisateur, au moins une image 3D de la frange de cils.

Avantageusement, le dispositif comporte en outre des moyens d'affichage pour afficher l'image de synthèse. Toutefois, notamment dans le cas où le résultat de la simulation est transmis à distance sous la forme d'un fichier ou enregistré sur un support optique ou électronique, les moyens d'affichage peuvent ne pas faire partie du dispositif Le résultat de la simulation peut encore être imprimé.

Les moyens d'acquisition peuvent comporter un système d'acquisition d'images 3D. Ce système d'acquisition peut être utile par exemple pour acquérir le relief d'un visage ainsi que sa texture, notamment de la personne à qui un conseil de beauté sera délivré suite à l'utilisation du dispositif

Le système d'acquisition d'images 3D peut comprendre une photographie numérique multivue, une photographie monovue avec plusieurs positions, une lumière structurée, ou n'importe quel autre dispositif permettant la reconstitution d'une surface 3D.

Les moyens d'acquisition peuvent comporter en outre au moins l'un d'un clavier et d'une souris ou tout autre moyen permettant d'entrer des données, par exemple un écran tactile, un système de reconnaissance vocale, un lecteur d'un support informatique, une liaison à un réseau informatique, une tablette graphique, cette liste n'étant pas limitative.

Le dispositif peut comporter en outre un curseur affiché par les moyens d'affichage pour matérialiser la valeur d'au moins un paramètre de simulation.

Le dispositif peut encore être agencé de manière à permettre à l'utilisateur de faire varier à l'aide des moyens d'acquisition ci-dessus, par exemple en utilisant un clavier ou une souris, la direction d'observation de la frange de cils virtuels.

L'invention a encore pour objet, selon un autre de ses aspects, un serveur, par exemple d'un site Internet, agencé pour générer en fonction d'au moins une valeur d'au moins un paramètre de simulation pouvant être modifiée à distance par un utilisateur, au moins une image de synthèse d'une frange de cils. Ce serveur peut par exemple être agencé pour permettre à une personne connectée au site d'adresser à celui-ci une ou plusieurs images, notamment au moins une image permettant de déterminer le relief du visage, et de visualiser au moins un résultat de simulation. Cette personne peut, le cas échéant, recevoir ensuite un conseil de beauté accompagné d'un produit et/ou d'une prescription et/ou d'un bon d'achat. Le serveur peut être agencé pour permettre à l'utilisateur de modifier la direction d'observation.

L'invention a encore pour objet, selon un autre de ses aspects, un procédé de fabrication d'un atlas, dans lequel on génère, en mettant en oeuvre le procédé de simulation précité, au moins deux images de synthèse associées respectivement à des valeurs différentes d'au moins un paramètre de simulation.

Un tel atlas peut être utilisé pour l'évaluation d'un individu sur un point de vente, au laboratoire, ou dans un institut de beauté.

Les images de synthèse ainsi générées peuvent être imprimées, notamment sur un même support ou affichées sur un même écran, ou enregistrées sur un même support optique ou électronique. A chaque image on peut associer un identifiant correspondant par exemple à un type de cil, de produit, de traitement et/ou de maquillage.

L'atlas peut par exemple permettre d'appréhender l'incidence sur l'aspect des cils de l'évolution d'un paramètre ou d'évaluer une typologie de cils.

Outre la classification des cils que cela permet, l'atlas peut encore servir, le cas échéant, à des fms pédagogiques.

L'invention a encore pour objet l'atlas en tant que tel, comportant au moins deux images de synthèse d'une frange de cils associées respectivement à des valeurs différentes d'au moins un paramètre de simulation. A chaque image peut être associé un identifiant. Cet identifiant peut être un caractère alphanumérique, un mot ou un logo, par exemple.

L'identifiant peut correspondre par exemple à une typologie de cils et/ou à un type de produit appliqué et/ou à un type de maquillage et/ou à un type de traitement.

L'invention a encore pour objet, selon un autre de ses aspects, un procédé pour simuler l'effet de l'utilisation d'un applicateur et/ou d'un produit appliqué sur des cils et/ou d'un traitement des cils, comportant :
- sélectionner ou faire sélectionner un applicateur et/ou un produit et/ou un appareil de traitement parmi plusieurs, à chaque applicateur et/ou produit et/ou appareil de traitement étant associées des caractéristiques de simulation propres,
- causer la présentation, par exemple à l'écran, d'au moins une image de synthèse des cils avec le produit appliqué sur ceux-ci, en fonction des caractéristiques de simulation de l'applicateur et/ou du produit sélectionné.

Des caractéristiques de simulation peuvent être présentes dans une table en association avec chaque produit, applicateur ou appareil de traitement correspondant.

L'invention peut permettre par exemple à un acheteur potentiel de visualiser avant l'achat les effets susceptibles d'être obtenus par l'utilisation d'un produit et/ou d'un applicateur et/ou d'un appareil de traitement donnés.

L'applicateur peut par exemple être sélectionné parmi les brosses et peignes et le produit parmi les différents mascaras, par exemple recourbants, allongeants ou autres.

L'appareil de traitement peut par exemple être sélectionné parmi les différents peignes, brosses et fer à recourber les cils.

L'invention a encore pour objet, selon un autre de ses aspects, un procédé pour évaluer une frange de cils, dans lequel on permet une comparaison entre une frange de cils réelle et une image générée par la mise en oeuvre du procédé de simulation précité.

Cette comparaison qui peut notamment être effectuée entre l'image des cils réels et l'image de synthèse, après affichage des deux images sur un même écran, peut être utile afin par exemple d'évaluer les cils et attribuer à une personne un identifiant correspondant. La connaissance de l'identifiant peut être utile par exemple pour choisir un produit de maquillage et/ou un traitement, lorsque l'identifiant correspondant aux cils pour lesquels le produit ou l'appareil de traitement est adapté est associé au produit de maquillage ou appareil de traitement, par exemple en étant imprimé sur l'emballage de celui-ci.

L'invention a encore pour objet un procédé pour promouvoir la vente d'un produit cosmétique et/ou d'un traitement cosmétique qui comporte l'utilisation d'une image de synthèse d'une frange de cils générée par la mise en oeuvre du procédé de simulation précité. La promotion pourra se faire par n'importe quel canal de communication. Elle pourra être faite notamment par un vendeur, directement sur un point de vente, par la radio, la télévision ou le téléphone, notamment dans le cadre de spots publicitaires ou de messages courts. Elle pourra être faite également par le canal de la presse écrite ou par le biais de tout autre document, en particulier à des fins publicitaires. Elle pourra se faire également par Internet, par tout autre réseau informatique adéquat ou par un réseau de téléphonie mobile. Elle pourra être faite également directement sur le produit, notamment sur son emballage ou sur toute notice explicative qui lui est associée.

L'invention a encore pour objet, selon un autre de ses aspects, un procédé pour délivrer un conseil de beauté, comportant l'étape consistant à :
- générer au moins un conseil à partir d'une image de synthèse d'une frange de cils soumise à une personne souhaitant être conseillée.

L'image de synthèse qui est soumise a par exemple été générée en fonction d'au moins une information en provenance de la personne souhaitant être conseillée, de façon à ce que cette image de synthèse présente un aspect correspondant au souhait de cette personne.

A l'image de synthèse peut être associée un identifiant, ce qui peut aider l'utilisateur dans le choix d'un produit et/ou d'un traitement permettant d'obtenir le résultat de maquillage correspondant. Il peut suffire par exemple à l'utilisateur de rechercher un produit ou un appareil de traitement comportant l'identifiant correspondant au maquillage recherché.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique un exemple de dispositif de simulation conforme à l'invention,
- la figure 2 est un schéma en blocs illustrant différentes étapes d'un exemple de procédé selon l'invention,
- les figures 3 à 5 sont des exemples de pages écran pouvant être affichées lors de la simulation,
- la figure 6 représente de manière schématique un atlas obtenu conformément à l'invention,
- la figure 7 représente un dispositif de conditionnement et d'application d'un produit auquel on a associé un identifiant correspondant à une typologie donnée de cils,
- les figures 8 et 9 sont des schémas en blocs illustrant différentes étapes d'autres exemples de procédés selon l'invention, et
- la figure 10 est un schéma illustrant la mise en oeuvre de l'invention par le biais d'un réseau informatique.

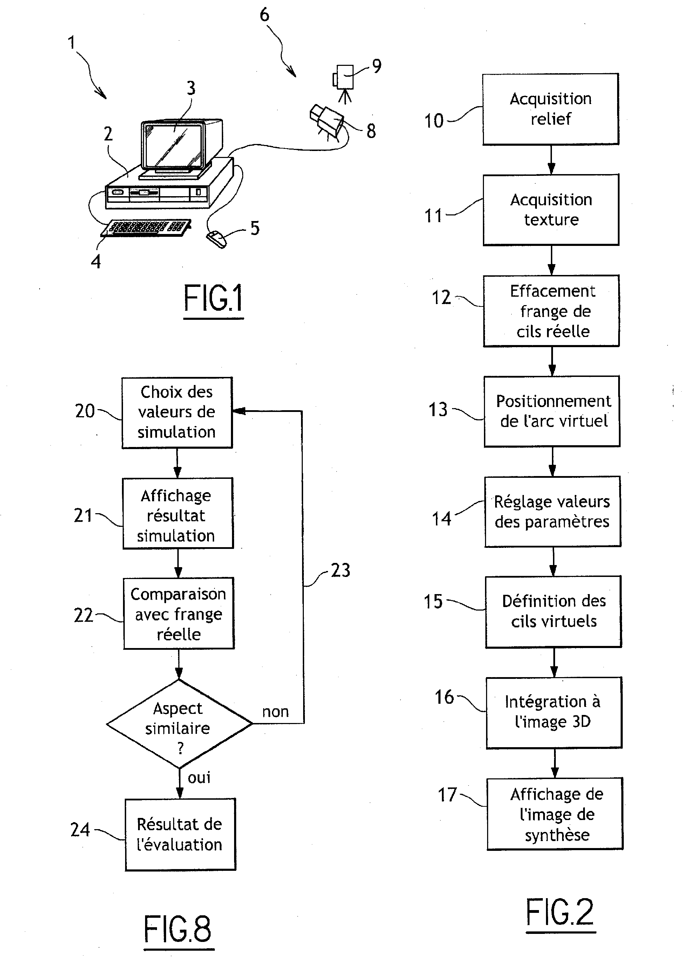

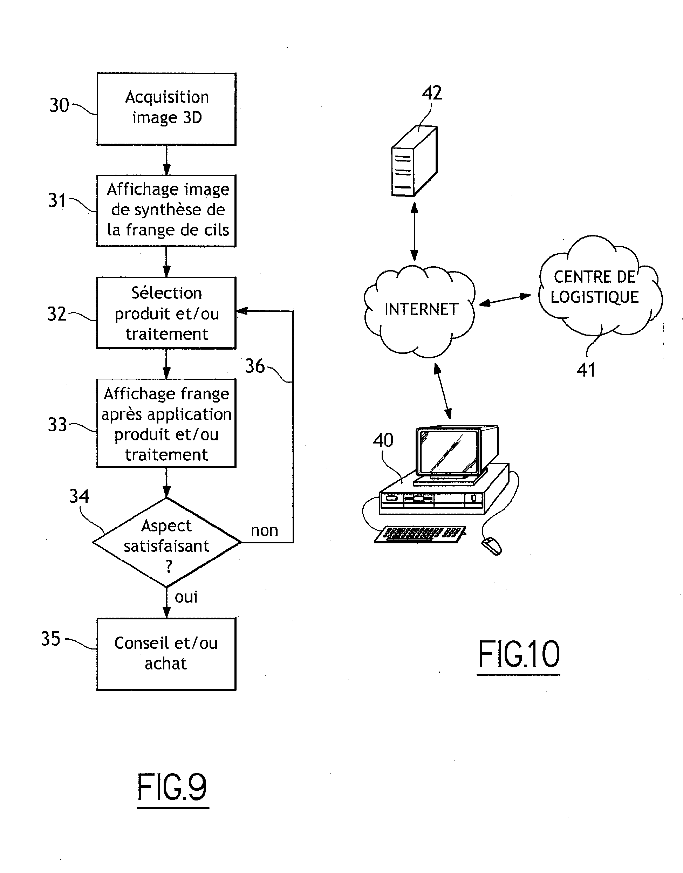

On a représenté à la figure 1 un dispositif 1 de simulation comportant une unité de calcul 2 constituée par exemple par l'unité centrale d'un micro-ordinateur, des moyens d'affichage 3 constitués par exemple par un écran à tube cathodique, à cristaux liquides, plasma ou autre, reliés à l'unité de calcul 2, un clavier 4 et une souris 5 reliés à l'unité de calcul 2 et un système 6 d'acquisition d'images 3D comportant par exemple une caméra 8 et un dispositif 9 de projection de franges.

Une sauvegarde des paramètres de la simulation peut être effectuée par l'unité de calcul 2, par exemple sur un disque dur ou tout moyen d'enregistrement des données, optique, électronique et/ou magnétique.

L'unité de calcul 2 peut être agencée de manière à traiter des images acquises par la caméra 8 afin de générer au moins une image 3D du visage et permettre son affichage sous un angle d'observation choisi par l'utilisateur. La connaissance du relief du visage peut par exemple résulter de l'acquisition d'au moins une image par la caméra 8 alors que des franges sont projetées sur le visage par le dispositif de projection 9. La texture du visage peut être acquise par la caméra 8 sans le dispositif de projection 9. Le logiciel permettant à l'unité de calcul 2 de générer des images 3D du visage est par exemple celui connu sous la dénomination MAYA® commercialisé par la société Alias WaveFront.

L'acquisition des images peut se faire sur seulement la moitié du visage et le relief de la totalité du visage peut être reconstitué grâce à une symétrie entre les deux moitiés du visage.

Les données 3D concernant le visage de l'individu peuvent être obtenues en utilisant n'importe quel outil approprié pour la reconstitution de surfaces 3D.

L'unité de calcul 2 peut être agencée pour effacer automatiquement les cils de l'image 3D du visage ou permettre leur effacement manuel, par exemple au moyen de la souris 5 en déplaçant un pointeur sur l'image 3D.

Dans l'exemple considéré, l'unité de calcul 2 est en outre agencée pour permettre à l'utilisateur d'ajuster sur l'image l'arc d'implantation des cils, par exemple en utilisant le logiciel MAYA précité.

En variante, l'unité de calcul 2 définit elle-même cet arc, par exemple en utilisant un logiciel de reconnaissance de formes.

L'unité de calcul 2 est par ailleurs programmée de manière à pouvoir générer au moins une image 3D d'une frange de cils, en fonction de paramètres de simulation concernant notamment des caractéristiques de la frange de cils, des caractéristiques des cils de cette frange et des caractéristiques du produit éventuellement appliqué sur les cils et/ou des caractéristiques de n'importe quel traitement qui peut avoir été effectué sur les cils.

L'image de synthèse de la frange de cils est générée par calcul des positions dans l'espace de chaque cil de la frange, en fonction de paramètres de simulation pouvant être ajustés par l'utilisateur, par exemple à l'aide de menus déroulants affichés à côté du résultat de la simulation.

Dans l'exemple considéré, les paramètres de simulation incluent :
- le nombre de cils,
- la présence de produit ou non sur les cils,
- l'épaisseur de la frange,
- la courbure en degrés des cils,
- la longueur des cils,
- l'épaisseur des cils,
- l'angle d'implantation des cils,
- l'angle de balayage des cils,
- l'angle de rotation des cils,
- l'épaisseur du produit éventuellement présent sur les cils,
- la répartition du produit sur les cils de la frange.

Le cas échéant, des paramètres de simulation supplémentaires pourraient inclure la nature du produit et/ou les caractéristiques de l'applicateur utilisé et/ou les caractéristiques de l'appareil de traitement utilisé.

L'épaisseur de la frange est définie comme étant la largeur de la bande de peau sur laquelle les cils sont implantés. Lorsque l'épaisseur est très fine, les cils sont alignés selon une courbe qui coïncide avec l'axe longitudinal de la frange. Lorsque l'épaisseur est plus importante, les cils sont implantés dans une bande dont la largeur est déterminée par la valeur du paramètre d'épaisseur. Les cils peuvent alors être implantés, par exemple, de part et d'autre de l'axe longitudinal de la frange, le long de celui-ci. L'écartement d'un cil relativement à l'axe longitudinal de la frange peut dépendre d'un facteur aléatoire.

L'écartement des cils dans le sens longitudinal est déterminé en fonction du nombre de cils de la frange.

La courbure d'un cil est l'angle formé entre deux tangentes à un cil respectivement à sa base et à son extrémité libre.

L'angle d'implantation des cils est défini par l'angle entre l'horizontale et la tangente à un cil au niveau de sa base.

L'angle de balayage des cils est défini par l'angle entre la tangente du cil à sa base et la verticale.

L'angle de rotation des cils correspond à l'angle formé entre la verticale et le plan dans lequel le cil évolue.

Le paramètre épaisseur de produit permet de définir l'épaisseur des cils revêtus de produit.

Le paramètre proportion vise à corriger l'épaisseur du dépôt afin de le rendre plus ou moins elliptique en section.

Les valeurs des paramètres peuvent être visualisées en unités métriques, par exemple en mm, en cm ou en in.

Pour améliorer le réalisme de la simulation, l'aspect du dépôt de produit peut être granuleux. Cet aspect granuleux peut être simulé sous le logiciel MAYA® notamment grâce à des paramètres de rugosité ayant des fréquences différentes le long des cils.

Avantageusement, l'unité de calcul 2 est agencée pour effectuer une simulation multizone, l'utilisateur pouvant par exemple définir pour chacun des paramètres de simulation précités des valeurs pour au moins deux, mieux trois zones, à savoir une zone centrale et des zones gauche et droite respectivement situées de part et d'autre de la zone centrale. Les trois zones peuvent correspondre chacune par exemple à un tiers de la frange de cils.

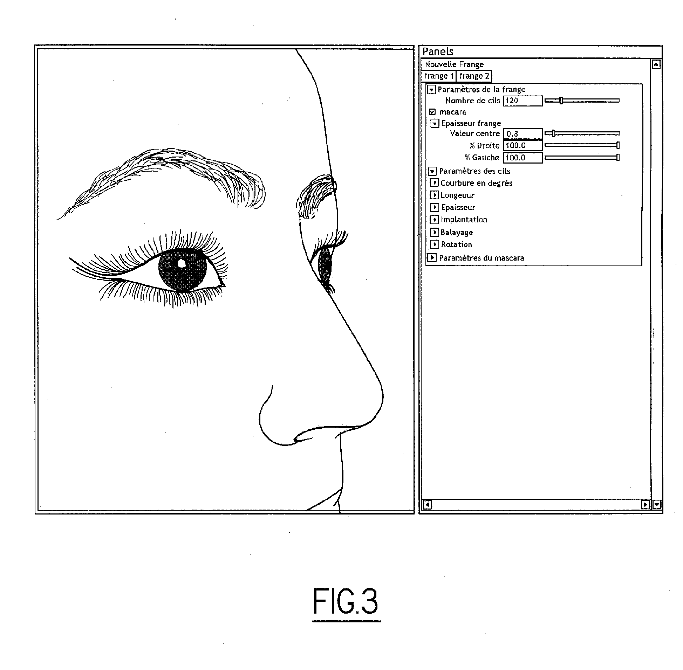

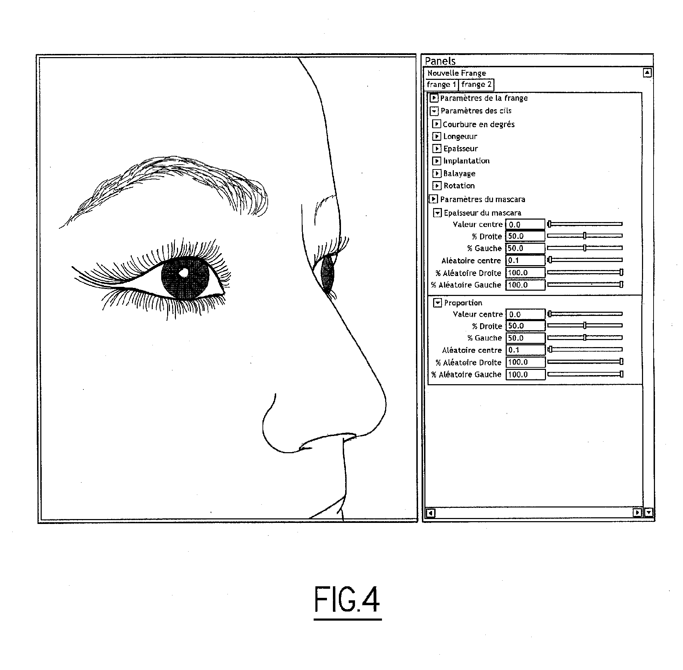

Sur les figures 3 à 5, on voit que l'utilisateur peut définir la valeur d'un paramètre pour la zone centrale et les valeurs pour les autres zones en fonction d'un pourcentage de la valeur pour la zone centrale.

Les modifications des valeurs des paramètres s'effectuent avantageusement au moyen de curseurs pouvant être affichés à l'écran simultanément à un résultat de la simulation, comme on peut le voir à l'examen des figures 3 à 5, et l'unité de calcul 2 est agencée de manière à afficher, si on le souhaite, le résultat de la simulation sensiblement dès qu'une valeur d'un paramètre de simulation a été modifiée, de façon à permettre à l'observateur de bien percevoir les changements induits par une telle modification.

Un facteur aléatoire peut être appliqué à chaque paramètre pour chaque zone. Ainsi, une valeur nominale entrée par l'utilisateur pourra être modulée en fonction des cils par un facteur aléatoire, ce qui peut contribuer au réalisme de la simulation.

Le dispositif 1 peut s'utiliser de la manière suivante.

Tout d'abord, à des étapes 10 et 11, on peut, comme illustré à la figure 2, procéder à l'acquisition du relief puis de la texture du visage d'une personne.

Une fois cette acquisition effectuée, on peut procéder à l'étape 12 à l'effacement des cils. Un tel effacement peut être effectué manuellement ou de manière automatique.

A l'étape 13, l'utilisateur peut positionner l'arc selon lequel les cils virtuels s'étendront. Ce positionnement peut encore être automatique.

A l'étape 14, l'utilisateur peut sélectionner certains paramètres de simulation et modifier les valeurs de ceux-ci. Lors du réglage des valeurs, l'utilisateur peut se servir de menus déroulants, comme illustré sur les figures 3 à 5.

L'unité de calcul 2 est agencée pour lire la ou les nouvelles valeurs et définir à l'étape 15 les cils virtuels.

Une fois les cils virtuels définis, ceux-ci peuvent être intégrés à l'image 3D du visage à l'étape 16 et le fichier image résultant peut être affiché à l'étape 17 et/ou enregistré sur un support optique ou électronique et/ou transmis à distance, par exemple par le réseau Internet.

Le cas échéant, si le dispositif 1 le permet, l'utilisateur peut modifier la direction d'observation, afin par exemple d'observer les cils de face, de trois quarts ou de côté. A cet effet, un curseur ou des flèches (non représentés) peuvent être affichés, qui permettent par exemple de faire tourner le visage vers la gauche ou la droite et de descendre ou de monter le point d'observation, voire de l'éloigner ou de le rapprocher.

L'utilisateur peut modifier des paramètres de simulation, afin par exemple de simuler des maquillages où les cils sont plus ou moins chargés de produit, allongés ou recourbés.

L'utilisateur peut également modifier, si le dispositif 1 le permet, d'autres caractéristiques d'aspect du visage, par exemple une couleur de rouge à lèvres, de cheveux, de fond de teint, d'ombre à paupières, de fard à joues, d'eyeliner, etc.

L'invention peut trouver de nombreuses applications.

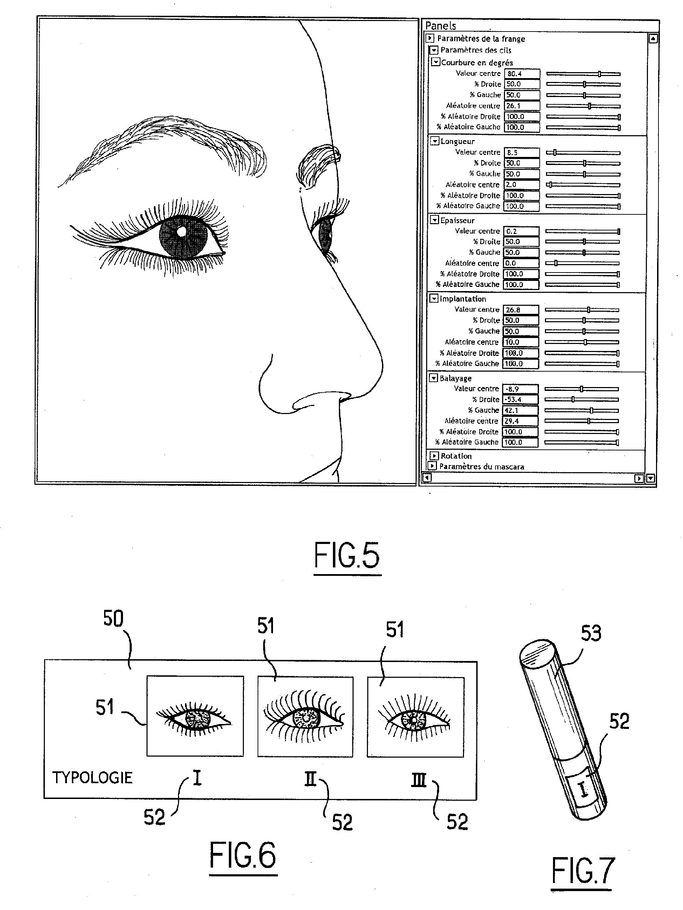

Tout d'abord, l'invention peut être utilisée pour générer des images des cils correspondant à différentes typologies afin de constituer un atlas 50 tel que celui représenté de manière schématique à la figure 6.

Pour ce faire, on peut imprimer une image correspondant à certaines valeurs des paramètres de simulation, modifier au moins l'une de celles-ci et recommencer l'étape d'impression jusqu'à ce que l'on dispose de suffisamment d'images représentatives de l'évolution de l'aspect des cils en fonction de la modification d'une ou de plusieurs valeurs des paramètres de simulation.

L'atlas 50 peut servir à illustrer des typologies de cils, à chaque image 51 de l'atlas 50 étant par exemple associée une typologie, laquelle peut être affectée d'un identifiant 52 tel que par exemple au moins un caractère alphanumérique.

On peut ainsi constituer par exemple des atlas de courbure des cils, de longueur des cils ou encore des atlas de maquillage des cils, en faisant varier par exemple la quantité de produit déposée sur les cils, du moins chargé au plus chargé.

Le cas échéant, l'identifiant 52 associé à une image de l'atlas peut figurer également sur un dispositif 53 de conditionnement et d'application d'un produit sur les cils, comme illustré à la figure 7, afin d'indiquer aux consommateurs à quelle typologie de cils le produit est adapté ou quel type de maquillage est susceptible d'être obtenu.

L'invention permet encore, comme illustré à la figure 8, d'évaluer les cils d'une personne.

Pour ce faire, on peut choisir les valeurs des paramètres de simulation à l'étape 20 de manière à ce que l'image affichée en 21 puisse être comparée avec les cils réels à l'étape 22.

Lorsque l'aspect n'est pas suffisamment proche, on peut à l'étape 23 modifier le choix des valeurs des paramètres de simulation et procéder par ajustements successifs des valeurs jusqu'à l'obtention d'un résultat de simulation d'aspect jugé similaire à celui de la frange de cils réelle, à l'étape 24. On peut alors associer à la frange réelle les valeurs des paramètres de simulation. On peut ainsi quantifier certaines caractéristiques d'aspect des cils et, en fonction de ces valeurs, préconiser par exemple l'application d'un produit ou le suivi d'un traitement. On peut évaluer de manière similaire un résultat de maquillage.

On a illustré à la figure 9 un autre exemple de mise en oeuvre de l'invention, dans lequel on commence à l'étape 30 par faire une acquisition d'une image 3D du visage d'un consommateur, par exemple sur un point de vente ou dans un institut de beauté.

On peut ensuite afficher à l'étape 31 une image de synthèse de ses cils et permettre à l'observateur, à l'étape 32, de choisir un produit et/ou un traitement à effectuer sur ceux-ci.

On peut afficher à l'étape 33 une nouvelle image de synthèse des cils en fonction du produit ou du traitement choisi, de façon à permettre au consommateur de percevoir l'effet du produit ou du traitement sur les cils.

A l'étape 34, le consommateur peut indiquer si le résultat affiché correspond à son attente et dans l'affirmative, on peut proposer à l'étape 35 l'achat du produit ou simplement délivrer un conseil concernant le ou les produits à appliquer ou le ou les traitements à effectuer pour obtenir le résultat souhaité.

Lorsque le résultat affiché à l'étape 34 ne correspond pas aux attentes du consommateur, on peut à l'étape 36 offrir à l'utilisateur la possibilité de choisir un nouveau produit ou traitement et revenir à l'étape 32.

Dans une variante de mise en oeuvre, l'étape 30 est supprimée et la simulation de la frange de cils s'effectue avec l'image d'un visage qui n'est pas celui du consommateur, par exemple un visage réel ou de synthèse.

Un résultat de maquillage peut encore être simulé avant que le consommateur ne se voit proposer un produit ou un traitement, afin par exemple de permettre au consommateur de faire son choix entre plusieurs styles de maquillage.

L'invention peut être mise en oeuvre par Internet ou par tout autre réseau informatique et/ou de téléphonie. Dans ce cas, l'unité centrale 2 peut être implantée par exemple dans un serveur 42 relié au réseau et un utilisateur peut se connecter au serveur 2 en utilisant un ordinateur 40 ou tout autre moyen permettant d'échanger des informations avec le serveur 42, par exemple une borne interactive, un téléphone ou assistant personnel numérique mobile, comme illustré sur la figure 10.

Le serveur 2 peut, le cas échéant, être agencé pour envoyer des informations à un centre logistique 41 prévu pour adresser aux consommateurs un produit ou une offre d'achat d'un produit.

L'invention n'est pas limitée aux exemples qui viennent d'être décrits, et l'on peut notamment ajouter d'autres paramètres de simulation, concernant par exemple l'applicateur utilisé pour maquiller les cils. Selon l'applicateur sélectionné, une valeur d'épaisseur de produit peut être automatiquement attribuée par exemple, ou les cils être plus ou moins séparés et/ou recourbés.

L'unité centrale 2 peut encore être programmée pour préconiser un applicateur à utiliser en fonction du résultat de simulation affiché. Le consommateur se verra alors par exemple préconiser l'utilisation d'un fer à recourber les cils en cas de courbure importante des cils sur l'image de synthèse.

La nature du produit peut également être ajoutée comme paramètre de simulation afin par exemple de permettre à l'utilisateur de faire varier la couleur du mascara ou l'allongement des cils procuré par le produit, notamment lorsque celui-ci contient des fibres.

Le cas échéant, l'unité centrale 2 peut être agencée de manière à permettre à l'utilisateur de sélectionner des mèches de cils en vue de les maquiller différemment du reste de la frange.

L'image 3D des cils est de préférence intégrée à une image 3D d'un visage mais l'on peut encore l'intégrer à une ou plusieurs images 2D, par exemple des vues du visage selon plusieurs directions d'observation.

Dans des exemples de mise en oeuvre de l'invention, au moins une image 3D d'au moins une portion du visage est générée, et par exemple visualisée ou imprimée, la frange des cils d'un oeil étant générée avec un aspect dépendant d'au moins un paramètre de simulation qui peut être modifié par l'utilisateur et l'autre frange de cils étant générée, et visualisée ou imprimée, avec un aspect différent.

Par exemple, une frange peut être générée selon le procédé de simulation décrit précédemment tandis que l'autre frange correspond à la frange réelle de l'individu ou à une frange simulée avec une valeur différente dudit paramètre.

Cela peut faciliter une comparaison par l'utilisateur entre des cils maquillés et/ou ayant subi un traitement et des cils sans maquillage ou traitement.

L'invention peut permettre, selon certains de ses aspects, à un individu d'évaluer un maquillage ou un traitement souhaité de ses cils.

Le procédé suivant peut être mis en oeuvre :
- permettre à un individu de visualiser au moins une image d'une frange avec un aspect simulé dépendant d'au moins un paramètre de simulation,
- permettre à un utilisateur, qui peut être l'individu ci-dessus, de modifier la valeur dudit paramètre.

Une évaluation peut être effectuée en fonction des paramètres qui ont du être modifiés pour obtenir la frange simulée ressemblant à la frange réelle. Par exemple, en partant d'une même frange initiale, les paramètres modifiés peuvent varier d'un individu à un autre. Cela fournit un outil pour l'évaluation d'une frange de cils, qui peut être qualifiée grossièrement parlant de « mesure inverse ».

Dans d'autres exemples, au moins un individu peut visualiser au moins une frange simulée et peut être invité à modifier l'aspect de ladite frange en modifiant au moins un paramètre de simulation.

Une frange simulée peut être construite pour refléter la perception qu'a un individu de ses cils. Au vu de la frange simulée, un conseil de beauté peut être donné.

L'expression « comportant un » doit être comprise comme étant synonyme de l'expression « comportant au moins un », sauf si le contraire est spécifié.

## Revendications

1. Procédé permettant de simuler l'aspect au moins d'une frange de cils, comportant l'étape consistant à générer, en fonction d'au moins une valeur d'au moins un paramètre de simulation pouvant être modifiée par un utilisateur, au moins une image 3D de la frange de cils,
dans lequel l'utilisateur peut modifier au moins une valeur d'un paramètre de simulation relatif à au moins une caractéristique d'un produit appliqué sur les cils et/ou d'un traitement cosmétique des cils.

2. Procédé selon la revendication 1, **caractérisé par le fait que** l'utilisateur peut modifier au moins une valeur d'un paramètre de simulation relatif à au moins une caractéristique d'un produit appliqué sur les cils.

3. Procédé selon la revendication 1, **caractérisé par le fait que** l'utilisateur peut modifier au moins une valeur d'un paramètre de simulation relatif à au moins une caractéristique d'un traitement cosmétique des cils.

4. Procédé selon la revendication 3, **caractérisé par le fait que** le traitement cosmétique est choisi parmi : peigner les cils et/ou recourber les cils.

5. Procédé selon l'une quelconque des revendications précédentes, **caractérisé par le fait que** l'image 3D de la frange de cils est incorporée à l'image d'un visage.

6. Procédé selon la revendication précédente, **caractérisé par le fait que** l'image du visage est une image 3D.

7. Procédé selon la revendication 5 ou 6, **caractérisé par le fait que** l'image du visage est au moins partiellement une image réelle.

8. Procédé selon l'une quelconque des revendications précédentes, **caractérisé par le fait que** l'image de synthèse est générée cil par cil.

9. Procédé selon l'une quelconque des revendications précédentes, **caractérisé par le fait que** la frange de cils comporte entre 10 et 300 cils.

10. Procédé selon l'une quelconque des revendications précédentes, **caractérisé par le fait qu'**un facteur aléatoire au moins est appliqué à au moins une caractéristique de la frange, des cils la composant ou du produit appliqué sur les cils.

11. Procédé selon l'une quelconque des revendications précédentes, **caractérisé par le fait que** l'image de synthèse est générée à partir d'une simulation multizone de la frange, cette simulation multizone permettant à l'utilisateur de définir (14) des valeurs de paramètres de simulations propres à au moins deux zones différentes de la frange.

12. Procédé selon la revendication précédente, **caractérisé par le fait que** l'on paramètre différemment pour la simulation au moins une zone centrale et deux zones gauche et droite respectivement situées de part et d'autre de cette zone centrale.

13. Procédé selon l'une quelconque des revendications précédentes, **caractérisé par le fait que** l'on permet à un utilisateur de modifier au moins une valeur d'un paramètre de simulation concernant au moins une caractéristique de la frange.

14. Procédé selon la revendication précédente, **caractérisé par le fait que** la caractéristique de la frange est choisie parmi le nombre de cils, la présence ou non d'un produit de maquillage sur les cils et l'épaisseur de la frange.

15. Procédé selon l'une quelconque des revendications précédentes, **caractérisé par le fait que** l'on permet à un utilisateur de modifier au moins une valeur d'un paramètre de simulation concernant au moins une caractéristique des cils.

16. Procédé selon la revendication précédente, **caractérisé par le fait que** la caractéristique des cils est choisie parmi la courbure des cils, leur longueur, leur épaisseur, et les angles définissant l'orientation dans laquelle les cils s'étendent depuis la surface de la peau.

17. Procédé selon la revendication précédente, **caractérisé par le fait que** la caractéristique du produit est choisie parmi l'épaisseur du produit déposé et la répartition du produit.

18. Procédé selon l'une quelconque des revendications précédentes, **caractérisé par le fait que** l'on permet à l'utilisateur de sélectionner un applicateur.

19. Procédé selon l'une quelconque des revendications précédentes, **caractérisé par le fait que** l'on affiche au moins un moyen de réglage des valeurs des paramètres de simulation sur un même écran qu'une image de synthèse de la frange des cils et **par le fait que** l'on modifie de manière quasi-simultanée l'aspect de l'image de synthèse en réponse à tout changement des paramètres de simulation.

20. Procédé selon la revendication précédente, **caractérisé par le fait que** les moyens de réglage comportent un curseur.

21. Procédé selon l'une quelconque des revendications précédentes, **caractérisé par le fait que** l'on permet à l'utilisateur de modifier la direction d'observation de la frange de cils.

22. Dispositif (1) permettant de simuler l'aspect d'au moins une frange de cils, comportant :
- une unité de calcul (2),
- des moyens d'acquisition (4, 5, 8, 9),
l'unité de calcul (2) étant agencée pour générer, en fonction d'au moins une valeur d'au moins un paramètre de simulation acquise par les moyens d'acquisition et pouvant être modifiée par l'utilisateur, au moins une image 3D de la frange de cils.

23. Dispositif selon la revendication 22, **caractérisé par le fait qu'**il comporte en outre des moyens d'affichage (3) pour afficher un résultat de simulation.

24. Dispositif selon la revendication précédente, **caractérisé par le fait que** les moyens d'acquisition comportent un système (8, 9) d'acquisition d'images 3D.

25. Dispositif selon l'une quelconque des trois revendications précédentes, **caractérisé par le fait que** les moyens d'acquisition comportent au moins l'un d'un clavier (4) et d'une souris (5).

26. Dispositif selon la revendication 22, **caractérisé par le fait que** les moyens d'affichage comportent un écran (3).

27. Dispositif selon la revendication 22, **caractérisé par le fait qu'**il comporte en outre un curseur affiché par les moyens d'affichage et matérialisant la valeur d'au moins un paramètre de simulation.

28. Serveur (2) notamment d'un site Internet, **caractérisé par le fait qu'**il est agencé pour générer, en fonction d'au moins une valeur d'au moins un paramètre de simulation pouvant être modifié à distance par un utilisateur, au moins une image 3D d'une frange de cils.

29. Serveur selon la revendication 28, **caractérisé par le fait qu'**il est agencé pour permettre à l'utilisateur de modifier la direction d'observation.

30. Procédé de fabrication d'un atlas (50), dans lequel on génère, en mettant en oeuvre le procédé tel que défini dans l'une quelconque des revendications 1 à 21, au moins deux images de synthèse (51) associées respectivement à des valeurs différentes d'au moins un paramètre de simulation.

31. Procédé selon la revendication 30, **caractérisé par le fait que** les images de synthèse (51) ainsi générées sont imprimées.

32. Procédé pour simuler l'effet de l'utilisation d'un applicateur et/ou d'un appareil de traitement et/ou d'un produit appliqué sur des cils, comportant les étapes suivantes :
- sélectionner ou faire sélectionner un applicateur et/ou un appareil de traitement et/ou un produit parmi plusieurs, à chaque produit et/ou applicateur et/ou appareil de traitement étant associé des caractéristiques de simulation propres,
- causer la présentation, notamment sur un écran, d'au moins une image de synthèse des cils avec le produit appliqué et/ou des cils traités avec l'appareil de traitement sur ceux-ci, en fonction des caractéristiques de simulation de l'applicateur et/ou l'appareil de traitement et/ou du produit.

33. Procédé pour évaluer une frange de cils, dans lequel on permet une comparaison entre une frange de cils réelle et une image générée par la mise en oeuvre du procédé tel que défmi dans l'une quelconque des revendications 1 à 21.

34. Procédé selon la revendication précédente, **caractérisé par le fait que** l'on permet la comparaison entre l'image des cils réels et l'image de synthèse après affichage des deux images sur un même écran.

35. Atlas (50) comportant au moins deux images de synthèse (51) d'une frange de cils associées respectivement à des valeurs différentes d'au moins un paramètre de simulation.

36. Atlas selon la revendication 35, **caractérisé par le fait qu'**à chaque image est associé un identifiant (52).

37. Procédé permettant de simuler l'aspect d'au moins une frange des cils, comportant :
- générer, en fonction d'au moins une valeur d'au moins un paramètre de simulation modifiable par l'utilisateur, au moins une image 3D de la frange de cils, cette image étant incorporée dans une image 3D d'un visage qui est au moins partiellement une image réelle.

38. Procédé permettant de simuler l'aspect d'au moins une frange de cils comprenant :
- générer, en fonction d'au moins une valeur d'au moins un paramètre de simulation modifiable par l'utilisateur, au moins une image 3D de la frange de cils, l'image de synthèse étant générée à partir d'une simulation multizone de la frange, cette simulation multizone permettant à l'utilisateur de défmir (14) des valeurs de paramètres de simulation propres à au moins deux zones différentes de la frange.

39. Procédé permettant de créer une image, comprenant les étapes consistant à :
- inviter un individu à faire l'objet de l'acquisition d'au moins une image numérique d'au moins une portion de son visage,
- générer une image 3D fondée au moins en partie sur ladite image numérique ainsi qu'une image 3D d'une frange de cils dépendant d'au moins un paramètre de simulation,
- inviter l'individu à donner au moins une information relative au moins audit paramètre de simulation,
- modifier ledit paramètre de simulation en fonction de cette information,
- générer une image 3D modifiée en fonction du paramètre de simulation modifié.
